# EUROPEAN PATENT APPLICATION

(11) **EP 3 674 921 A1**
(43) Date of publication of application: **01.07.2020**
(21) Application number: 18216021.8
(22) Date of filing: 31.12.2018
(51) Int. Cl.: G06F 16/31, G06F 16/33, G06F 17/27

(54) **A COMPUTER-IMPLEMENTED METHOD OF DOMAIN-SPECIFIC FULL-TEXT DOCUMENT SEARCH**

(71) Applicant: Charles University, 12116 Praha 2 (CZ)
(72) Inventor: Hajic, Jan, 10000 Praha 10 - Strasnice (CZ)
(74) Representative: Dadej, Leopold

(57) **Abstract**

A computer-implemented method for domain-specific full-text document search including indexing of documents set of steps and querying documents set of steps in which three main processes are involved: preparation of embeddings, indexing of a set of relevant documents, and querying of the indexed documents

## Description

### Field of the Invention:

The present invention relates to document indexing, full-text search, and retrieval, more particular to a computer-implemented method of domain-specific full-text document search.

### Background of the Invention:

Search in text documents as an instance of unstructured data is ubiquitous. Search in large text documents, such as the internet, is performed by using well-known algorithms, such as page-rank (Page, 2002). However, search on smaller collections such as at an enterprise or public administration level, which has much smaller collection and recall (as opposed to precision) pays an important role, different systems are employed, as embodied by many closed as well as Open Source solutions, such as Lucene and Solr (The Apache Software Foundation, 2017). Many other small-scale and specialized systems are available as well, such as Wolter Kluwer's ASPI (Wolters Kluwer, 2018).

The core technology used in these systems called "Full-text Search" is indexing the text, where the index is stored together with document ID and/or position in the text. The index is implemented efficiently so that given a search term in a query, the index can be quickly retrieved and the referred document and/or piece of text can be returned and displayed in some form to the user. Special attention is in the implementation paid to queries containing more search terms/words to perform the "join" operation in the search efficiently. In addition, statistical or other quantitative methods are used to rank the output of the search in case more or many documents are found and are to be presented to the user. To restrict the number of documents, or to focus the search, the search interface presents typically other choices to the user - faceted search, such as restriction to a certain period of document creation, author, type of the document, etc. In addition, especially in critical applications, documents are mostly manually assigned "keywords" that better represent the topic of the document and/or the documents are classified to a predefined list of topics. These topics and/or keywords are then presented to the user and used in the search as well or alone.

Similar methods can be used and are used in search in audio and video documents, with the additional step that a transcript has to be performed prior to indexing. Such transcript is done manually or automatically. Recently, automatic methods, such as Automatic Speech Recognition, can be applied to transcribe the speech to text with sufficient accuracy. Once transcribed, even if not perfectly, the text can be indexed using the same methods as in case of documents originally created as text. Keywords and topic classification are often applied to documents which are sometimes not transcribed, allowing at least non-full-text search.

Current methods for up to medium-sized collection of documents with approx. up to 10s of millions of pages suffer from three major problems, which are related to the properties of natural languages which convey by far most of the information contained in these documents:
- morphology, inflection and derivation,
- ambiguity - homonymy,
- synonymy.

Morphology, inflection and derivation: many large languages like German, Arabic, Slavic languages and especially Ugro-finish languages like Hungarian, Finnish, Turkish use inflection and/or derivation, by changing the world from its base form called rd, rom to other morphologic form to express grammatical or semantic properties. These forms can range from one or two words per single lemma, e.g. for most English words, to tens of thousands of words, e.g. for some Finish words. During full-text search normalization to base form at indexing time or expansion to all forms at query time are performed. Even though current systems contain some of these approaches and do achieve 97-98% accuracy in lemmatization (Straka, 2016), they suffer from the other two problems mentioned.

Ambiguity - homonymy: many words or word forms in language are homonymous or polysemous, i.e. there is ambiguity in their interpretation, either grammatical or semantic. For example, "book" contained in these documents could have a meaning "to make a reservation" or a physical object to be read. Such an ambiguity has to be resolved using context and such a resolution might not be correct. Accuracy in polysemy disambiguation is still well below 80% on average. The common problem of any such method is that its result is categorical, i.e. it has to select one lemma or one meaning in polysemous cases, leaving no space for uncertainty and its handling.

Synonymy, i.e. the fact that the same fact or meaning can be expressed in several ways is another obstacle, since every user and every domain might use different words to express the same thing, leaving the user with only a subset of relevant results. In current systems, this is being alleviated by using techniques of "query expansion", in which user queries are replaced by a disjunction of queries, in which all search terms are multiplied by using synonyms in which word or multiword expressions shares the same meaning. These synonym sets have to be pre-defined and they also suffer mainly from incompleteness and from the fact that no proper weighting of them is applied.

### Summary of the Invention:

The above mentioned drawbacks are eliminated by the present computer-implemented method of domain-specific full-text document search including indexing of documents set of steps and querying documents set of steps, whereas
during indexing of documents set of steps:
- In step 1, text analysis from segmentation to basic syntactic dependencies and morphological features using a neural network trained previously on an unrelated training corpus T1, coming from a similar domain or a general domain, on a large corpus C in the language of the documents to be later indexed and containing also the documents to be indexed, if available, is performed resulting in a corpus R1;
- In step 2, semantic analysis is performed with use of neural networks either after the text analysis with use of the corpus R1 as an input, or as an alternative, step 2 is performed jointly with the text analysis, taking input to step 1 directly, resulting in corpus R2, while the semantic processing engine used is trained on a corpus T2 which has to contain semantic relations in the form of directed dependencies between content words, manually prepared, and extended to multilingual cases by known multitask techniques;
- Next in step 3, linking of all named and other non-verb entities in the corpus R2 to any large or small scale ontology O3B that contains at least a paragraph-long description of the ontology entry is performed resulting in Verb entities (predicates) linked to semantic classes O3B consisting of multilingual sets of normalized predicates, while the semantic classes are created based on extraction from parallel corpora and manual pruning using multiple annotation and majority voting technologies and pre-prepared data T3A for sense-based verb classification and T3B for named entity recognition;
- Next in step 4, the corpus R2 and the corpus R3 are merged, resulting in a corpus R4, where the corpus R3 is fully grounded, while the merge is performed as straightforward substitution of entities from the corpus R3 to labelled graphs containing the semantic analysis in the corpus R2;
- Next in step 5, word-, lemma- and nametype- and grounded entities embeddings are created from the corpus R4 based on their local and global context within R4, as expressed in the semantic structure contained in R4 resulting in a set of tables E5;
- while during indexing of documents set of steps, steps 1 to 4 are performed on every document Di to be indexed, resulting in an annotated document DiR4, followed next by mapping all entities in DiR4 of every document Di processed to embeddings using the set of tables E5, while the resulting embeddings are stored with the document and text positions in the form of a multidimensional index X, the dimensions of which will be determined at indexing time by minimizing the cost of access, using an optimizing technique called Minimum Description Length method, resulting in documents indexed by entity embeddings taken from E5;
while during querying documents set of steps,
- a user input query Q inserted into simple full-text window is analyzed with use of steps from 1 to 4, as if the query is a document itself resulting in an annotated query Q4 and then entities identified in the annotated query Q4 are mapped to embeddings using tables E5, resulting in a set of embeddings Q5;
- embeddings Q5 are used in an approximate search performed by multidimensional search methods through index X resulting in a set A of documents found, each associated with a real number representing similarity to the query Q;
- returned documents and positions in them matching the query are pruned to a predefined number of outputs set by the user at query time; and
- returned documents are ranked by similarity and presented on the computer screen together with additional information on a total number of documents found.

During the whole method there are three main processes involved: preparation of embeddings, indexing of a set of relevant documents, and querying of the indexed documents.

The novelty of the approach is in the following additions to existing methods of text processing: (a) dependency morphological and syntactic analysis (b) semantic role labeling (c) named entity recognition, (d) named entity linking and (e) mapping (conversion and replacement) of words, sentences and text segments (up to a document length) to embeddings. These additions will be interlinked with standard text processing components used previously in connection with full-text search (tokenization, sentence break detection, lemmatization). Indexing will be multidimensional, i.e., performed on the resulting embeddings on top of words, lemmas and the named and linked entities in the semantically analyzed structure. Search will be performed in this multidimensional space using the embeddings as descriptors and similarity metrics, producing weighted ranking of results.

In general, the invented method uses linguistic information in deep learning and the main inventive idea is the particular combination of text analysis modules listed above with embeddings computed in the semantic space of the analyzed text and used as descriptors for similarity search as an approximation of a continuous measure for soft matching of user queries to the (indexed) text.

The present method performs indexation of text document whether created originally as text or transcribed manually or automatically from speech, or scanned and processed by an OCR device and then allow for searching the text using short and/or long queries in natural language with high semantic accuracy.

For a training corpus T1 for example a collection such as a collection of documents in the Universal Dependencies collection (Straka, 2016) is used.

Semantic analysis is performed resulting in a semantic structure of every segment of the text, in terms of nested predicate structures based on linguistic properties of words of any origin like verbs, nouns, adjectives, with variable number of arguments. The corpus T2 contains manually prepared data, for example treebanks with semantic annotation, such as (Hajič et al, 2006). Semantic analysis is performed using neural networks such as Dozat et al. (2018).

Ontology entry is for example based on the collection of texts as Wikipedia, DBpedia, medical ontologies such as ICD, domain-based ontologies, etc. It uses technology such as (Taufer, 2016) which works universally without the need of supervised training. Predicates are linked to semantic classes consisting of multilingual sets of normalized predicates reverse linked to possible lemmas and/or multiword units, with their grammatical properties (Urešová et al, 2018).

Corpus R3 as a result of semantic analysis is fully grounded by using URI, universal resource identifiers contained in nodes of a structure of nested predicates. No training is necessary nor combination of R1 and R2 corpora, it is performed as straightforward substitution of entities from R3 to graphs in R2.

Semantic entity embeddings are vectors of real numbers. They are created from the corpus R4 using known techniques as described in Mikolov et al. (2013). Set of tables E5 is created as a mapping from a text unit to such a vector. The mapping is computed either directly (stored in the form of a table), or implemented by a trained artificial neural network, which behaves as a mapping function, and it will be referred in the subsequent description simply as "embeddings (mapping) table". The following combinations text units are used for creating the embeddings, and stored in E5:
- word in semantic context
- lemma in semantic context
- named entity (also referred as NE) in semantic context
- grounded entity in semantic context

All of the above is also computed from a sequence of these units as found in the analyzed document, in which case an artificial neural network is used as the mapping function, formally behaving as a table lookup performing mapping from a full document to a set embeddings. These mappings are considered part of E5.

Text positions of embeddings are occurrences of the individual text units referred to.

Multidimensional search methods are for example those as described in Nalepa et al. (2018). Returned documents are pruned to a predefined number of outputs desired by the user or user interface.

As an example of the advantage of the method as described above, two cases are described below: (a) a case C1 where current methods fail to discover a document (or occurrence of a term in a document), called a recall error and (b) a case C2 in which a false positive is found and a document found and returned to user as relevant when in fact it is not, called a precision error.

In the case C1, lack of synonym incorporation is the cause which the invented method of approximation of semantic distance between words, lemmas and entities solves. Consider the terms (multiword expressions) "repair shop" and "service facility"; if a document contains one, then even the standard method of lemmatization indexing will not find documents containing only or mostly the other term, since its relevance will not rank high or it will not be found at all. However, embeddings computed on large amounts of documents will convert both terms to vectors which will be close together in the measure using similarity measure between their descriptors represented by the embeddings; embeddings in general display this property if as (Mikolov et al. 2013) or (Sugathadasa et al., 2018) have shown, but for search, the positive effect will be amplified because the method according to this invention computes them in the semantic context by using also named and grounded entities.

In the case C2, homonymy is the problem that causes current systems make precision errors. For example, the word "table" might signify either a physical object that is used, e.g. for sitting at, but also an abstract mathematical or computer science-related object, e.g. a spreadsheet or part of a relational database, or other abstract entities - Wikipedia currently distinguishes nine different meanings of the word. Since the proposed processing pipeline contains the named entity linking component, which distinguishes these meanings, the document will be indexed properly by such an embedding that will correspond to the proper meaning and not to the other ones; supposing the query will be disambiguated in the same way, the match will be semantically coherent. However, even if the Named Entity Linked module is not perfect, the embeddings, i.e. vector representations of the entities, since it will be a concatenation also of the embeddings of the plain words and lemmas, makes sure the distance to the other meanings will not prevent relevant documents to be ranked high even if the Named Entity Linking component makes an error. This "soft fail" mechanism is an inherent property of embeddings and will be transferred by the proposed processing pipeline into the similarity search, keeping both precision and recall high (or at least higher than current search methods for full-text search which only use hard indexing by lemmas or similar even multiword entities).

The device embodying the invention will consist of a computer, on which three above mentioned software components will be implemented. Each component consists of a series of modules implementing the individual sets of steps, as described above and depicted in the Figures below.

### List of Drawings of Exemplary Embodiments:

The attached schemes serve to illustrate the invention, where
- Fig. 1: Scheme of set of steps to create set of embedding tables
- Fig. 2: Scheme of indexing document set of steps
- Fig. 3: Scheme of querying documents set of steps

### Exemplary Embodiment:

Following three main processes involved in the present method are demonstrated in the enclosed schemes.

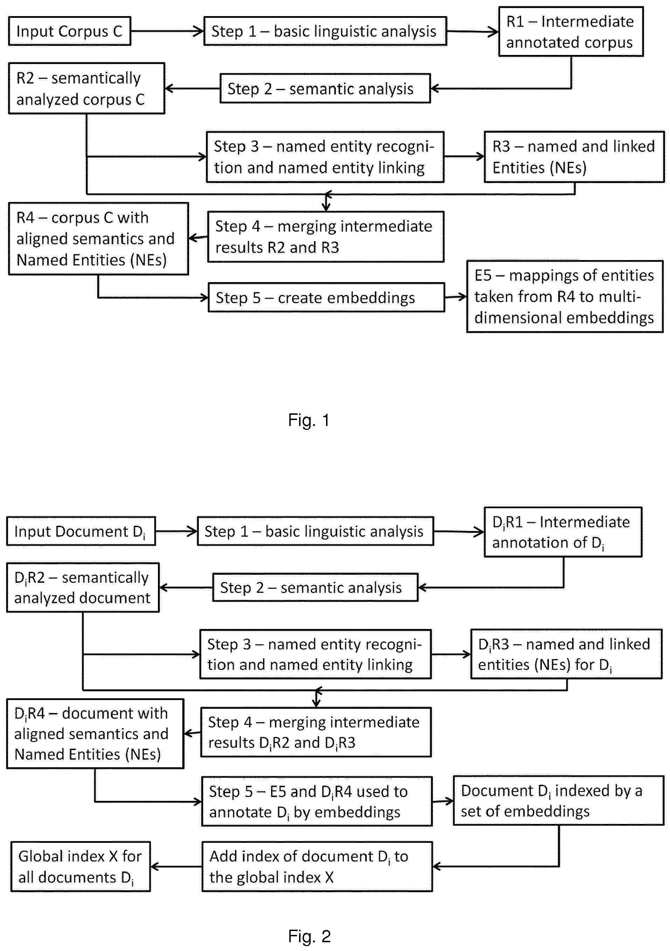

Fig. 1 shows an example of a creation of the set of embedding mapping tables E5 from a large corpus in the same language as the set of documents to be later indexed. The documents themselves may or may not be part of this corpus; more accurate results are however obtained if they are included in C.

Fig. 2 shows an example of indexing a single document Dᵢ. The process depicted in Fig. 2 has to be performed for every document in the collection of documents to be indexed to be available for search at query time.

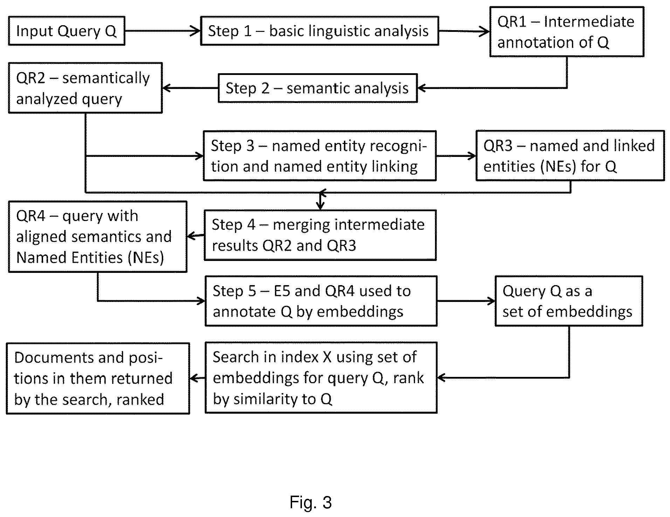

Fig. 3 shows and example of processing a query at the query time, i.e. when a user searches for a document. A query Q may be expressed as a single word, as a sequence of a few words, or as a textual description of what the user wants to search for, or a transcript of what the user said in case the system uses automatic speech recognition so that the user can talk instead of typing. In all such cases, the text of the query is processed by the steps depicted in Fig. 3 and the resulting documents with positions in the document matching the query Q color coded or otherwise highlighted is presented to the user posing originally the query Q.

In a preferred embodiment scenario, the following concrete implementation pipelines (sequences of processing modules) are used. The referenced modules are assumed to already contain all necessary models in order to perform the respective step; these models are either available with the individual components directly, or they can be trained (learned from data, for example for a different language or domain) in a way described also with the individual components through the references.
1. In the creation of embeddings set of steps (Fig. 1), the Basic Linguistic Analysis step is performed on a large collection of documents (not necessarily only from the set of documents to be indexed later, but general sets can be used, e.g. corpora collected from the internet etc.), in the language of interest, by using the UDPipe tools (Straka et al., 2016), resulting in R1. The Semantic Analysis steps are performed on R1 by Treex, modular framework for deep language analysis (https://lindat.mff.cuni.cz/services/treex), using the "t-layer analysis" scenario, as available, e.g. at http://lindat.mff.cuni.cz/services/treex-web/run, resulting in R2. While the "t-layer analysis" scenario can be used also for the Basic Linguistic Analysis, better results are obtained by first running the UDPipe tools and then, after a simple conversion, the data is subsequently processed by Treex using the t-layer analysis scenario, starting with the "A2T::CS::MarkEdgesToCollapse" module, as described at http://lindat.mff.cuni.cz/services/treex-web/run. For the Named Entity Recognition and Linking steps, two successive sub-steps are required: first, a named entity module must process the result of the semantic analysis module (R2) and identify thus spans of named entities and assign them a type; for this purpose, NameTag tool (https://lindat.mff.cuni.cz/en/services#NameTag) is used. Its output is then fed directly to a Named Entity Linking (grounding) sub-step, which is implemented by (Taufer, 2016), and results in R3. R4 is then produced by simply merging R2 and R3 based on the position of the individual words in the text by using stand-off annotation, which is a standard technique that is applied for text annotation.

Embeddings are created in the final step. First, the following data streams are created by extraction from R4, based on the annotation attributes: word sequence, lemma sequence, sequence of typed named entities and sequence of grounded entities. These sequences are then fed to an embedding-creating subsystem, which is implemented by a Deep Artificial Neural network, as described in (Mikolov et al., 2013), where "word" is replaced by the respective units (words, lemmas, NEs, grounded NEs) in the four data streams. The result is E5, embeddings tables mapping the four types of units into real-valued vectors of a predefined length (as described in (Mikolov et al., 2013)).
2. In the document indexing series of steps (Fig. 2), the same sequence of steps up to the merging step (Step No. 4) has to be performed on every document to be indexed (let's number the documents by index *i*, ranging from 1 to k, where k is the number of documents to process in one run); if any of the steps is replaced by a different embodiment of the same text processing step during embedding table creation, best results are achieved if the same step or steps are performed for document indexing. That is, these steps will, for the preferred embodiment of the embedding creation step, consist of the following sequence of steps: processing will start with the Basic Linguistic Analysis step is performed on every document Dᵢ by using the UDPipe tools (Straka et al., 2016), resulting in DᵢR1. The Semantic Analysis steps are performed on DᵢR1 by Treex, modular framework for deep language analysis (https://lindat.mff.cuni.cz/services/treex), using the "t-layer analysis" scenario, as available e.g. at http://lindat.mff.cuni.cz/services/treex-web/run, resulting in DᵢR2. While the "t-layer analysis" scenario can be used also for the Basic Linguistic Analysis, better results are obtained by first running the UDPipe tools and then, after a simple conversion, the data is subsequently processed by Treex using the t-layer analysis scenario, starting with the "A2T::CS::MarkEdgesToCollapse" module, as described at http://lindat.mff.cuni.cz/services/treex-web/run. For the Named Entity Recognition and Linking steps, two successive sub-steps are required: first, a named entity module must process the result of the semantic analysis module (DᵢR2) and identify thus spans of named entities and assign them a type; for this purpose, NameTag (https://lindat.mff.cuni.cz/en/services#NameTag) is used. Its output is then fed directly to a Named Entity Linking (grounding) sub-step, which is implemented by (Taufer, 2016), and results in DᵢR3. DᵢR4 is then produced by simply merging DᵢR2 and DᵢR3 based on the position of the individual words in the text by using stand-off annotation, which is a standard technique that is applied for text annotation.

All the four attributes of the resulting annotation in DᵢR4, namely words, lemmas, named entities and grounded entities are then mapped to embeddings using the corresponding table from E5. These entities are then associated with the document Dᵢ in its (inverted) index X, and to each embedding a position in the document is attached for targeted display to user at query time if the document is selected. In addition, the embeddings (concatenated to form a single vector) for a given position in a document are taken as descriptors for the similarity search procedure according to (Nalepa et al., 2018) and processed to create the necessary indexing structures for search at query time.

Additional document or a set of documents may be added to the index X at any time by following all the steps described here and in Fig. 2.
3. At query time, the user enters a query Q in the form of text (or a spoken query is transcribed to a text by some automatic speech recognition module (not included in the Fig. 3 since it is a standard optional extension in full-text search)). The query can be of any length, from a single word to a text describing the user's search goal. The query then undergoes the same steps as in component 2 (document indexing), including the final mapping of the annotated query to the precomputed embeddings (cf. Fig. 3), i.e., the query is first processed with the Basic Linguistic Analysis step by using the UDPipe tools (Straka et al., 2016), resulting in annotated query QR1. The Semantic Analysis steps are performed on QR1 by Treex, modular framework for deep language analysis (https://lindat.mff.cuni.cz/services/treex), using the "t-layer analysis" scenario, as available e.g. at http://lindat.mff.cuni.cz/services/treex-web/run, resulting in QR2. While the "t-layer analysis" scenario can be used also for the Basic Linguistic Analysis, better results are obtained by first running the UDPipe tools and then, after a simple conversion, the data is subsequently processed by Treex using the t-layer analysis scenario, starting with the "A2T::CS::MarkEdgesToCollapse" module, as described at http://lindat.mff.cuni.cz/services/treex-web/run. For the Named Entity Recognition and Linking steps, two successive sub-steps are required: first, a named entity module must process the result of the semantic analysis module (QR2) and identify thus spans of named entities and assign them a type; for this purpose, NameTag tool (https://lindat.mff.cuni.cz/en/services#NameTag) is used. Its output is then fed directly to a Named Entity Linking (grounding) sub-step, which is implemented by (Taufer, 2016), and results in QR3. QR4 is then produced by simply merging QR2 and QR3 based on the position of the individual words in the text by using stand-off annotation, which is a standard technique that is applied for text annotation.

All the four attributes of the resulting annotation in QR4, namely words, lemmas, named entities and grounded entities are then mapped to embeddings using the corresponding table from E5, forming a set of embeddings to be used as descriptor in the similarity search procedure as described in (Napela et al., 2018).

The similarity search procedure (Napela et al., 2018) against the set of documents Dᵢ as indexed in X using the embeddings extracted from the query by the above procedure as descriptors for the similarity search results in a set of documents Dj and a set of positions {pⱼₓ} within each such document, ranked by similarity. These documents are displayed to the user originally posing the query Q in a compact form, with a reference to the full document (and a position in it).

### References:

Timothy Dozat, Christopher D. Manning: Deep Biaffine Attention For Neural Dependency Parsing. https://arxiv.org/pdf/1611.01734.pdf. 2018
A. Grover and J. Leskovec: "node2vec: Scalable feature learning for networks," in Proceedings of the 22nd ACM SIGKDD international conference on Knowledge discovery and data mining. ACM, pp. 855-864, 2016*.*
Hajíč Jan, Panevová Jarmila, Hajičová Eva, Sgall Petr, Pajas Petr, Štěpánek Jan, Havelka Jiří, Mikulová Marie, Žabokrtský Zdenek, Ševčíková-Razímová Magda, Urešová Zdeňka: Prague Dependency Treebank 2.0. Software prototype, Linguistic Data Consortium, Philadelphia, PA, USA, ISBN 1-58563-370-4, http://www.ldc.upenn.edu, Jul 2006
Tomas Mikolov, Kai Chen, Greg Corrado, Jeffrey Dean (2013). Efficient Estimation of Word Representations in Vector Space. arXiv:1301.3781v3 [cs.CL]
Filip Nalepa, Michal Batko, Pavel Zezula (2018): Towards Faster Similarity Search by Dynamic Reordering of Streamed Queries. T. Large-Scale Data- and Knowledge-Centered Systems 38: 61-88 (2018*)*
Page, Larry, "PaaeRank: Bringing Order to the Web". Archived from the original on May 6, 2002. Retrieved 2016-09-11., Stanford Digital Library Project, talk. August 18, 1997 (archived 2002)
The Apache Software Foundation, "Welcome to Apache Lucene". Lucene™ News section. Archived from the original on 21 December 2017. Retrieved 21 December 2017*.*
Straka Milan, Hajič Jan, Straková Jana: UDPipe: Trainable Pipeline for Processing CoNLL-U Files Performing Tokenization, Morphological Analysis, POS Tagging and Parsing. In: Proceedings of the 10th International Conference on Language Resources and Evaluation (LREC 2016), Paris, France, ISBN 978-2-9517408-9-1, pp. 4290-4297, 2016
Keet Sugathadasa, Buddhi Ayesha, Nisansa de Silva, Amal Shehan Perera, Vindula Jayawardana, Dimuthu Lakmal, Madhavi Perera: Legal Document Retrieval using Document Vector Embeddings and Deep Learning. https://arxiv.org/pdf/1805.10685.pdf, May 27, 2018, retrieved Dec. 10, 2018*.*
Taufer, Pavel: Named Entity Linking. Diploma thesis, MFF UK, 2016*.*
Urešová Zdeňka, Fučíková Eva, Hajíčová Eva, Hajič Jan: Creating a Verb Synonym Lexicon Based on a Parallel Corpus. In: Proceedings of the 11th International Conference on Language Resources and Evaluation (LREC 2018), Paris, France, ISBN 979-10-95546-00-9, pp. 1432-1437, 2018
Wolters Kluwer. "On ASPI". https://www.wolterskluwer.cz/cz/aspi/o-aspi/o-aspi.c-24.html Archived from the riginal on Dec. 2, 2018*.*

## Claims

1. A computer-implemented method for domain-specific full-text document search including indexing of documents set of steps and querying documents set of steps, **characterized in that**
during indexing of documents set of steps:
- In step 1, text analysis from segmentation to basic syntactic dependencies and morphological features using a neural network trained previously on an unrelated training corpus T1, coming from a similar domain or a general domain, on a large corpus C in the language of the documents to be later indexed and containing also the documents to be indexed, if available, is performed resulting in a corpus R1;
- In step 2, semantic analysis is performed with use of neural networks either after the text analysis with use of the corpus R1 as an input, or as an alternative, step 2 is performed jointly with the text analysis, taking input to step 1 directly, resulting in corpus R2, while the semantic processing engine used is trained on a corpus T2 which has to contain semantic relations in the form of directed dependencies between content words, manually prepared, and extended to multilingual cases by known multitask techniques;
- Next in step 3, linking of all named and other non-verb entities in the corpus R2 to any large or small scale ontology O3B that contains at least a paragraph-long description of the ontology entry is performed resulting in Verb entities (predicates) linked to semantic classes O3B consisting of multilingual sets of normalized predicates, while the semantic classes are created based on extraction from parallel corpora and manual pruning using multiple annotation and majority voting technologies and pre-prepared data T3A for sense-based verb classification and T3B for named entity recognition;
- Next in step 4, the corpus R2 and the corpus R3 are merged, resulting in a corpus R4, where the corpus R3 is fully grounded, while the merge is performed as straightforward substitution of entities from the corpus R3 to labelled graphs containing the semantic analysis in the corpus R2;
- Next in step 5, word-, lemma- and nametype- and grounded entities embeddings are created from the corpus R4 based on their local and global context within R4, as expressed in the semantic structure contained in R4 resulting in a set of tables E5;
- while during indexing of documents set of steps, steps 1 to 4 are performed on every document Di to be indexed, resulting in an annotated document DiR4, followed next by mapping all entities in DiR4 of every document Di processed to embeddings using the set of tables E5, while the resulting embeddings are stored with the document and text positions in the form of a multidimensional index X, the dimensions of which will be determined at indexing time by minimizing the cost of access, using an optimizing technique called Minimum Description Length method, resulting in documents indexed by entity embeddings taken from E5;
while during querying documents set of steps,
- a user input query Q inserted into simple full-text window is analyzed with use of steps from 1 to 4, as if the query is a document itself resulting in an annotated query Q4 and then entities identified in the annotated query Q4 are mapped to embeddings using tables E5, resulting in a set of embeddings Q5;
- embeddings Q5 are used in an approximate search performed by multidimensional search methods through index X resulting in a set A of documents found, each associated with a real number representing similarity to the query Q;
- returned documents and positions in them matching the query are pruned to a predefined number of outputs set by the user at query time; and
- returned documents are ranked by similarity and presented on the computer screen together with additional information on a total number of documents found.
